Europäisches Patentamt

**European Patent Office**   ·

**Office européen des brevets**

(19)

(11) Numéro de publication: **0 143 073**

**A1**

(12)

# DEMANDE DE BREVET EUROPEEN

(21) Numéro de dépôt: **84810444.4**

(51) Int. Cl.⁴: **A 61 C 11/00**

(22) Date de dépôt: **12.09.84**

(30) Priorité: **16.09.83 CH 5047/83**

(43) Date de publication de la demande:
**29.05.85 Bulletin 85/22**

(84) Etats contractants désignés:
**AT BE CH DE FR GB IT LI LU NL SE**

(71) Demandeur: **Merz, Eugen**
**Alte Landstrasse 94**
**CH-8803 Rüschlikon(CH)**

(71) Demandeur: **Sandhaus, Sami, Dr.**
**4, Avenue de Provence**
**CH-1007 Lausanne(CH)**

(71) Demandeur: **Troger, Norbert**
**Brüelweg 38**
**CH-4147 Aesch(CH)**

(72) Inventeur: **Sandhaus, Sami**
**4, Avenue de Provence**
**CH-1024 Lausanne(CH)**

(74) Mandataire: **Eschmann, Heinz et al,**
**A. Braun, Braun, Héritier, Eschmann AG Patentanwälte**
**Holbeinstrasse 36-38**
**CH-4051 Basel(CH)**

(54) **Articulateur occlusio-référentiel.**

(57) Il comprend un support de maxillaire supérieur (14) et un support de maxillaire inférieur (47). Le support inférieur comprend une pièce mobile (27) sur une crémaillère (24) supportant un bras (31) monté coulissant verticalement sur la pièce mobile (27) avec une course limitée pour son déplacement vertical sur la pièce mobile (27). Le bras 31 porte deux coulisses orthogonales croisées (41, 42). La coulisse supérieure (42) porte une table (47) montée sur une rotule sphérique. L'articulateur permet un enregistrement précis et une reproduction précise de la position d'occlusion des maxillaires et de la fermeture de la mandibule sans chercher à reproduire les articulations condyliennes.

./...

*Fig. 2*

Articulateur occlusio-référentiel

La présente invention a pour objet un articulateur occlusio-référentiel, autorisant la décomposition analytique du mouvement mandibulaire, comprenant un bâti sur lequel sont montés un support plan supérieur pour le moulage du maxillaire supérieur, s'étendant approximativement horizontalement et fixe en position d'utilisation, un support plan inférieur mobile pour le moulage du maxillaire inférieur et des moyens pour déplacer et positionner le support plan inférieur relativement au support plan supérieur, aussi bien perpendiculairement au support supérieur que parallèlement à ce support.

De nombreux types d'articulateurs ont été proposés dans le but de reproduire les mouvements de la mandibule, préalablement mesurés sur un individu, relativement au maxillaire supérieur pour permettre aux praticiens, en particulier aux prothésistes, de confectionner une prothèse dentaire conforme à la cinématique de l'individu concerné. L'articulateur est destiné à supporter des moulages des mâchoires inférieure et supérieure.

Dans les articulateurs connus, on a recherché, d'une manière générale, à reproduire plus ou moins grossièrement l'articulation condylienne. C'est le cas des articulateurs décrits dans les brevets FR 2 387 027, 2 278 312 et 2 498 924. Dans ces dispositifs, le support du maxillaire inférieur est en forme d'équerre

- 2 -

0143073

et, pour des raisons de commodité, c'est le support du maxillaire supérieur qui est articulé autour d'un axe sur ce support en équerre. En raison déjà de cette inversion, on ne reproduit pas le mouvement naturel de la mandibule.

Dans le brevet FR 2 188 442, est décrit un articulateur présentant cinq degrés de liberté correspondant chacun à un mouvement pur ou à une seule composante des mouvements naturels en vue de la reproduction fidèle de ces mouvements. Cet articulateur essaye d'atteindre ce but au moyen d'un support inférieur coudé comme une mandibule et articulé au moyen de deux sphères censées reprodure les condyles articulaires de la mandibule. Si la construction de cet articulateur est relativement simple, par contre son utilisation est compliquée. L'enregistrement des mouvements se fait au moyen de trois pieds dans des pastilles de cire ou de résine. Les pastilles ou cupules d'enregistrement sont ensuite utilisées pour commander le déplacement de la mandibule. L'enregistrement et la commande sont donc purement analogiques. En outre, les sphères des articulations ne reproduisent qu'imparfaitement les articulations condyliennes.

On a déjà proposé de travailler avec un support de maxillaire supérieur fixe, comme c'est le cas naturellement, et avec un support de maxillaire inférieur mobile dans tous les sens (demande de brevet EP 0 025 201). Dans cet articulateur le support mobile est monté sur six vérins commandés électroniquement. Un tel articulateur nécessite une électronique compliquée et coûteuse pour de petites séries.

Un articulateur purement mécanique à support supérieur fixe est décrit dans la demande de brevet EP 0 054 600. Le support de mandibule est déplaçable verticalement au moyen d'une vis verticale et d'un écrou molleté. Il comporte une partie mobile en forme d'équerre comprenant deux tiges verticales coopérant individuellement avec deux calottes rotatives dont le mouvement est censé reproduire le mouvement sagittal de la mandibule. L'enregistrement de la position d'occlusion se fait au moyen d'un relevé de la position angulaire des deux calottes rotatives.

Ce système, ainsi que tous les autres systèmes mécaniques antérieurs, repose sur un principe commun qui consiste à vouloir reproduire les articulations condyliennes naturelles. Or, ces articulations sont complexes et les mécanismes qui cherchent à les reproduire sont en outre entâchés d'une erreur provenant de la méconnaissance du mouvement exact et complet de la mandibule lors de sa fermeture. En effet, si la mandibule a effectivement un mouvement de pivotement au niveau des articulations condyliennes lors de sa fermeture sur le maxillaire supérieur, la dernière phase de ce mouvement de fermeture, plus précisément les derniers millimètres de ce mouvement de fermeture, ne correspondent plus à un mouvement de rotation, mais à un mouvement de translation verticale ou légèrement oblique.

Tournant résolument le dos à l'idée de reproduire la forme de la mandibule et ses articulations condyliennes, la présente invention a pour but de permettre un enregistrement précis et une reproduction précise de la position d'occlusion des maxillaires et

de la fermeture de la mandibule, sans chercher à reproduire les articulations condyliennes. L'articulateur à réaliser devait en outre être relativement simple sur le plan mécanique, facile à fabriquer, d'un usage aisé, d'un positionnement rapide et précis.

L'articulateur selon l'invention est caractérisé par le fait que le support inférieur comprend une pièce mobile sur un organe de guidage approximativement perpendiculaire au support plan supérieur et supportant un bras s'étendant perpendiculairement à l'organe de guidage et monté coulissant verticalement sur ladit pièce mobile, avec une course limitée et muni d'un organe d'arrêt à actionnement manuel pour son déplacement vertical sur ladite pièce mobile, ce bras portant deux coulisses orthogonales croisées munies chacune d'une vis graduée d'actionnement, la coulisse supérieure portant une rotule sphérique supportant une table plane présentant des moyens de positionnement pour le moulage du maxillaire inférieur, respectivement de son support.

La légère course du bras sur la pièce mobile qui le supporte permet de reproduire la dernière phase du mouvement de fermeture de la mandibule. En prévoyant un montage élastique, il est même possible d'obtenir un déplacement automatique du bras, en position d'occlusion, lorsqu'on modifie la latéralité, par exemple lors d'un examen de la diduction.

Les deux coulisses orthogonales croisées permettent d'enregistrer de façon simple et précise deux coordonnées rectangulaires de position centrale. Quant à la rotule sphérique, elle permet d'obtenir immédiatement l'inclinaison sagittale ou d'effectuer toutes corrections, dans n'importe quelle direction, de manière à obtenir une parfaite occlusion. L'enregistrement de la position de la rotule peut se faire par une graduation circulaire et par des méridiens gradués et/ou des parallèles tracés sur la rotule sphérique. Tous les éléments mobiles sont de préférence munis d'une manette de blocage.

L'ensemble constitué des deux supports forme un tout rigide qui est de préférence monté pivotant entre deux colonnes et blocable dans une position oblique, de manière à faciliter le travail du praticien.

Selon une variante préférée deux bras porte-outils rétractables et orientables sont montés sur le prolongement de deux colonnes transformant l'appareil en poste de travail ergonomique.

D'autres avantages de l'articulateur selon l'invention apparaîtront à la lecture de la description d'une forme d'exécution faite en relation avec le dessin annexé dans lequel :

La figure 1 représente une vue en élévation de face de l'articulateur.

La figure 2 en représente une vue en coupe axiale selon II-II de la figure 1.

La figure 3 en représente une vue de dessus.

La figure 4 représente, en coupe, un détail du bras du support inférieur.

L'articulateur comprend un bâti constitué d'un plateau 1 muni de pieds en caoutchouc portant deux colonnes 2 et 3 sur lesquelles sont montés les éléments de l'articulateur. Sur deux portées 4 et 5 des colonnes 2 et 3, sont fixées deux équerres verticales 6 et 7 formant potence et entre lesquelles est montée une entretoise horizontale 8, pivotante autour d'un axe 9. L'entretoise 8 est traversée par un second axe 10 qui traverse en outre les équerres 6 et 7 à travers deux lumières 11 en arc de cercle centré sur l'axe 9. L'entretoise 8 peut ainsi pivoter autour de son axe 9 d'un angle correspondant à l'arc de la lumière 11. Elle peut être bloquée dans la position désirée au moyen de deux écrous molletés 12 et 13. Autour de l'axe 10 est articulé une plaque 14 constituant le support plan supérieur pour le moulage du maxillaire supérieur. En position de travail, cette plaque 14 repose sur la face plane supérieure de l'entretoise 8. Elle est verrouillable dans cette position au moyen d'une manette 15 actionnant un doigt de verrouillage 16 s'engageant sous l'axe 9. La plaque 14 porte en outre, sur sa face inférieure, une plaque amovible 17 destinée à recevoir le moulage du maxillaire supérieur. Cette plaque est retenue par une vis molletée 18 et positionnée par une goupille 19.

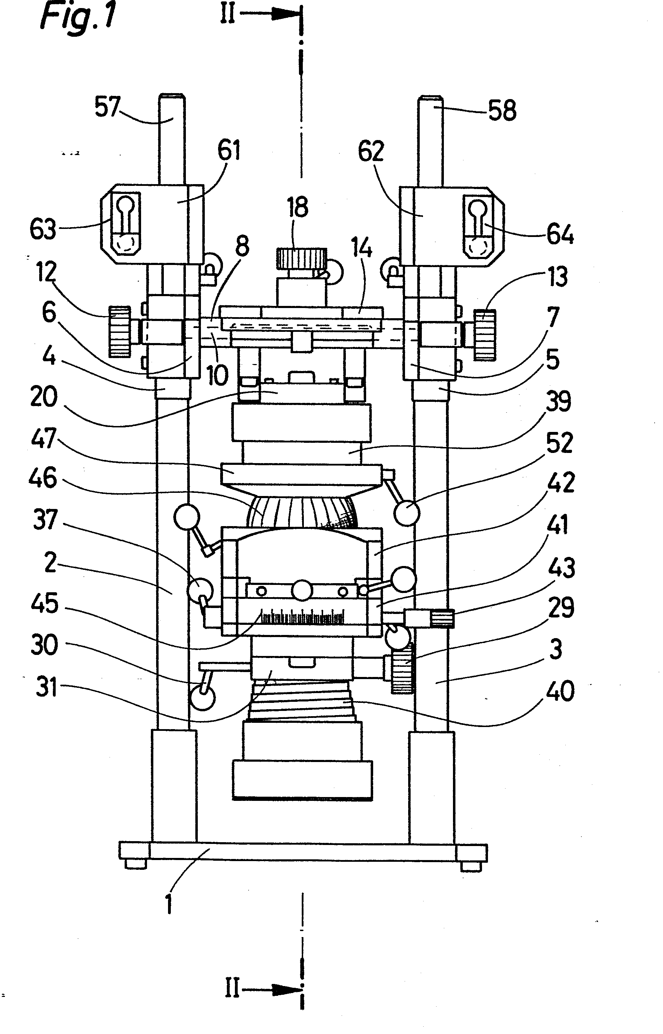

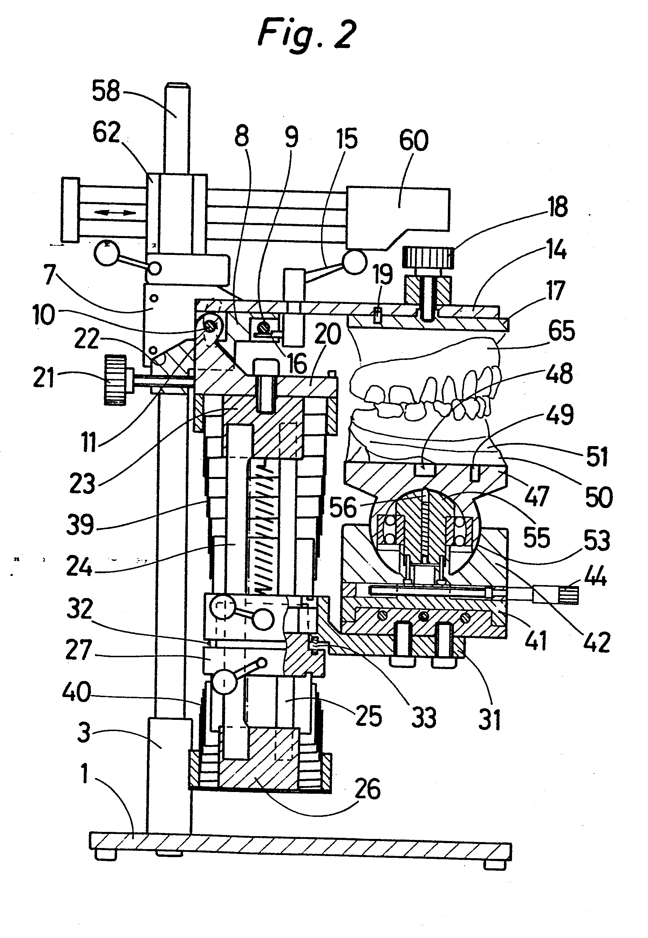

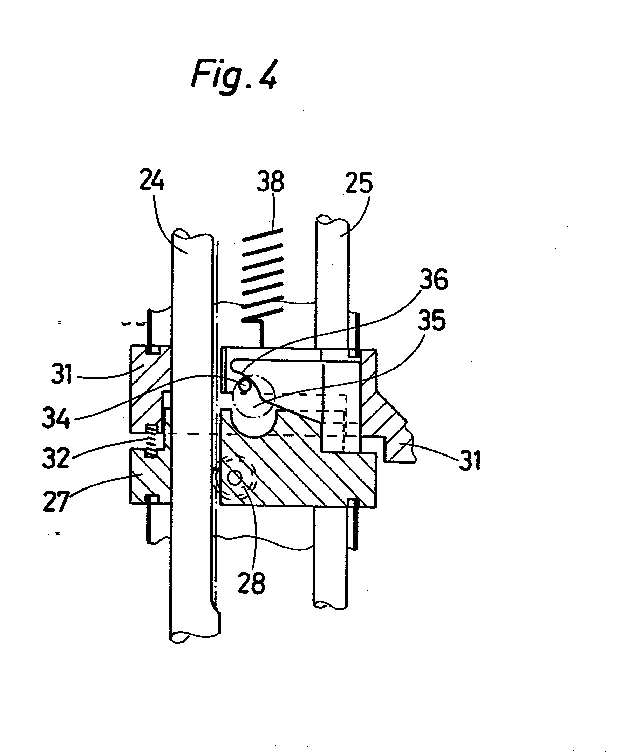

L'axe 8 porte une plaque 20, en forme d'équerre, qui a une orientation variable déterminée par une vis de butée 21 vissée dans un prolongement 22 de la traverse 8. Sous la plaque 20, est fixé un bloc 23 au moyen d'une vis. Ce bloc 23 est solidaire d'une crémaillère 24 et de deux colonnes de guidage dont l'une, 25, est visible à la figure 2. Les extrémités inférieures de la crémaillère 24 et des colonnes de guidage 25 sont fixées dans un bloc inférieur 26. La crémaillère 24 et les colonnes 25 traversent une pièce mobile 27 dont le détail est représenté à la figure 4. Cette pièce mobile 27 est munie d'un arbre denté horizontal 28 coopérant avec la denture de la crémaillère et est susceptible d'être entraînée au moyen d'un bouton molleté 29 (figure 1). La pièce mobile peut être bloquée à la hauteur désirée au moyen d'une manette 30 entraînant une vis de blocage agissant sur la crémaillère 24. La pièce mobile 27 soutient un bras horizontal 31 portant le support plan inférieur pour le moulage du maxillaire inférieure. Ce bras 31 est également monté coulissant sur les colonnes de guidage 25. Il est maintenu à environ 3 mm au dessus de la pièce mobile 27 par quatre ressorts dont deux, 32 et 33, sont visibles à la figure 2, les deux autres ressorts étant disposés dans les deux autres coins de la pièce mobile 27 rectangulaire. L'écartement des pièces 27 et 31 est limité par une came 34 solidaire d'un axe 35 monté dans le bras 31 et coopérant avec une rampe 36 de la pièce mobile 27. Cette came 34 est actionnable au moyen d'une manette 37 (figure 1) solidaire de l'arbre 35. L'actionnement de la came 34 permet d'amener le bras 31 en contact avec la pièce mobile 27 en comprimant les ressorts 32, 33. La came 34 a une position stable dans laquelle le bras 31 reste appliqué contre la pièce moible 27 sans moyen de blocage auxiliaire. L'équipage mobile constitué par la pièce mobile 27 et le bras 31 est en outre suspendu à deux ressorts compensateurs de poids 38 dont les extrémités supérieures sont attachées au bloc supérieur 23 (fig. 2). Ces ressorts 38 empêchent une descente rapide et dangereuse de l'équipage mobile. La crémaillère 24 et les colonnes de guidage 25 sont abritées dans deux soufflets métalliques 39 et 40 constitués de manière connue d'une tôle d'acier enroulée en hélice.

Le bras 31 porte deux coulisses 41 et 42 superposées et se croisant orthogonalement, analogues aux coulisses d'une table de machine-outil. Ces coulisses 41 et 42 sont respectivement déplaçables au moyen de deux vis micro-métriques 43 et 44. Elles se déplacent chacune en face d'une échelle graduée telle que 45 (figure 1).

Sur la coulisse supérieure 42 est montée une rotule sphérique 46 solidaire d'une table 47 constituant le support plan inférieur mobile pour le moulage du maxillaire inférieur. Cette table 47 présente des logements de positionnement 48 et 49 pour une plaque amovible 50 sur laquelle est fixé le moulage du maxillaire inférieur 51. La plaque 50 peut être bloquée au moyen d'une vis horizontale actionnable par une manette 52. La rotule 46 est montée d'une part dans un logement sphérique 53 de la coulisse supérieure 42 et d'autre part supportée par l'intermédiaire d'un roulement à billes 54 par une colonne centrale 55 dont l'extrémité supérieure est sphérique. Un doigt vertical 56 monté sur ressort et coopérant avec un logement central polaire de la rotule 46 assure un repérage de la position horizontale de la table 47 et un maintien doux dans cette position. La face supérieure plane de la coulisse supérieure 42 présente une graduation coopérant avec au moins un index de la rotule 46 pour la détermination et l'enregistrement de la position de la table 47 autour d'un axe vertical. Cette graduation peut être quelconque, par exemple en degrés, ou totalement arbitraire. Sur la rotule 46 sont en outre tracés des méridiens gradués permettant de déterminer

- 9 -

0143073

et d'enregistrer l'inclinaison de la table 47 relativement au plan horizontal.

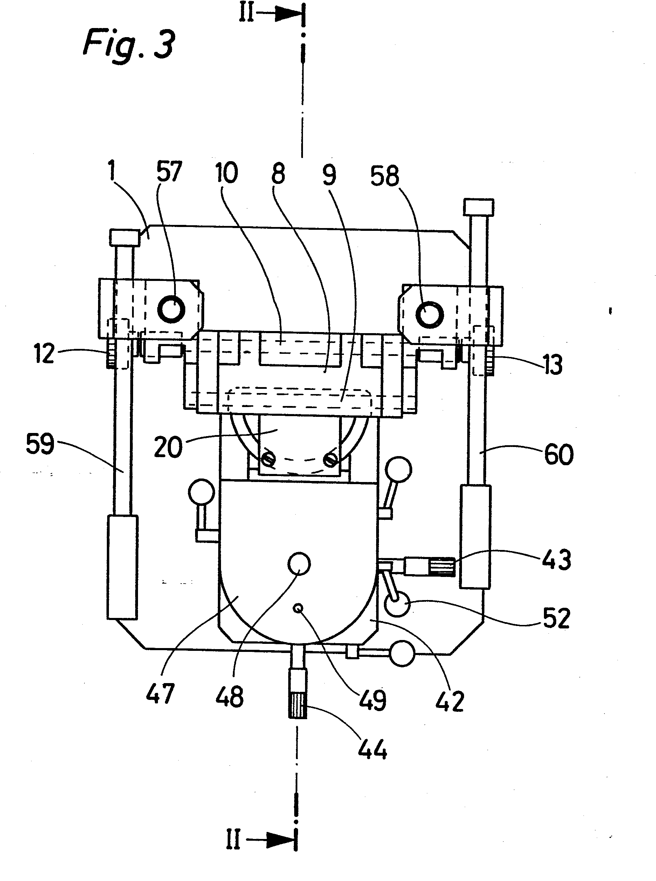

Sur le prolongement cylindrique 57 et 58 (fig. 3) des colonnes 2 et 3 sont en outre montés des bras horizontaux 59 et 60. Ces bras 59 et 60 sont montés coulissant dans des supports 61 et 62 (fig. 1) eux mêmes montés rotativement sur les colonnes 57 et 58. Tous ces montages sont réalisés au moyen de paliers. Ces bras 59 et 60 présentent à leurs extrémités des pinces 63 et 64 (figure 1) pour la fixation d'outils, par exemple une fraise, ou d'appareils de mesure, tels qu'un comparateur.

L'emploi de cet articulateur est particulièrement commode. Pour la fixation du moulage 65 de la maxillaire supérieure, le support supérieur 14 peut être relevé à la verticale autour de l'axe 10. Cette position relevée dégage en outre totalement la table 47, ce qui permet de fixer tout à fait librement le moulage 51 de la maxillaire inférieure sur cette table 47.

La plaque supérieure est ensuite rabattue et verrouillée au moyen de la manette 15 (fig. 2). Cette position fixe est conforme à la position fixe du maxillaire supérieure.

On fait monter ensuite la table 47 au moyen de l'écrou molleté 29 et de la crémaillère 24. L'enregistrement de la fonction mandibulaire du sujet dont les moulages de maxillaires sont montés sur l'articulateur est réalisés très simplement et avec précision au moyen des deux coulisses orthogonales 41 et 42 et au moyen de la rotule 46. Ces trois pièces mobiles permettent de donner à la table 47 n'importe quelle position, dans une certaine plage bien entendu, et d'enregistrer la position de cette table par la simple lecture des échelles graduées.

Il est ainsi possible d'étudier et d'enregistrer sans difficulté et avec précision l'inclinaison sagittale et la latéralité.

Pour les essais de fonctions mandibulaires, on fait pivoter le support inférieur autour de l'axe 10 au moyen de la vis molletée 21 (figure 2). Lors de ce pivotement, le bras 31 (fig. 4) est tout d'abord maintenu plaqué sur la pièce mobile 27. La fermeture finale de la mâchoire est réalisée au moyen de la came 34, c'est-à-dire en libérant le bras 31 qui est alors soulevé élastiquement par les ressorts 32 et 33, cette course verticale correspondant au déplacement en translation d'environ 3 mm identifié. Ce déplacement vertical a l'avantage d'être élastique, c'est-à-dire de se faire en douceur, sans risquer d'abimer le moulage, respectivement la prothèse contrôlée.

Cette position fermée étant atteinte, il est même possible, dans certains cas, d'effectuer des déplacements latéraux au moyen de la vis micro-métrique 43 pour contrôler la diduction, les dents du maxillaire supérieur, agissant comme des cames, pouvant repousser verticalement les dents du maxillaire inférieur en comprimant élastiquement les ressorts 32 et 33.

Il convient de relever que l'articulation supérieure autour de l'axe 10 du support du maxillaire inférieur n'est pas une fonction essentielle et qu'elle pourrait être supprimée, le déplacement de la maxillaire inférieure étant entièrement réalisable au moyen de la crémaillère, des coulisses orthogonales 41 et 42 et de la rotule 46.

L'articulation de l'ensemble autour de l'axe 9 est blocable dans une position oblique au moyen des écrous molletés 12 et 13 et permet à l'utilisateur de travailler dans une position inclinée commode.

La construction décrite ci-dessus est bien entendu susceptible de nombreuses variantes.

R e v e n d i c a t i o n s

1. Articulateur occlusio-référential comprenant un bâti sur lequel sont montés un support plan supérieur (14) pour le moulage du maxillaire supérieur (65), s'étendant approximativement horizontalement et fixe en position d'utilisation, un support plan inférieur mobile (47) pour le moulage du maxillaire inférieur (51) et des moyens pour déplacer et positionner le support plan inférieur relativement au support plan supérieur. aussi bien perpendiculairement au support supérieur que parallèlement à ce support, caractérisé par le fait que le support inférieur (47) comprend une pièce mobile (27) sur un organe de guidage (24) approximativement perpendiculaire au support plan supérieur (14) et supportant un bras (31) s'étendant perpendiculairement à l'organe de guidage (24) et monté coulissant verticalement sur ladite pièce mobile (27) avec une course limitée et muni d'un organe d'arrêt (34) à actionnement manuel (37) pour son déplacement vertical sur ladite pièce mobile (27), le bras (31) portant deux coulisses orthogonales croisées (41, 42) munies chacune d'une vis graduée d'actionnement, la coulisse supérieure (42) portant une rotule sphérique (46) supportant une table plane (47) présentant des moyens de positionnement (48, 49) pour le moulage du maxillaire inférieur (51), respectivement de son support (50).

2. Articulateur selon la revendication 1, caractérisé par le fait que ladite pièce mobile (27) est montée coulissante sur deux colonnes de guidage (24, 25) et qu'elle est suspendue à au moins un ressort de compensation de poids (38).

3. Articulateur selon la revendication 2, caractérisé par le fait que ledit bras (31) est supporté par ladite piéce mobile (27), par l'intermédiaire de ressorts (32, 33) et que l'organe d'arrêt est une came (34), dont l'axe d'actionnement est solidaire dudit bras (31), et qui coopère avec une portée (36) de ladite pièce mobile (27) pour comprimer lesdits ressorts (32, 33).

4. Articulateur selon l'une des revendications 1, 2 ou 3, caractérisé par le fait que les deux supports (14, 47) et la crémaillère (24) constituent un ensemble monté pivotant autour d'un axe horizontal (10), des moyens de blocage étant prévus pour bloquer l'ensemble dans une position de travail ergonomique.

5. Articulateur selon la revendication 4, caractérisé par le fait que ledit ensemble est monté sur deux colonnes (2, 3) dont les prolongements constituent des supports (61, 62) pour des bras porte-outils pivotants et rétractables (59, 60) autorisant tous travaux prothétiques, tels que fraisage, parallélisation, traçage.

6. Articulateur selon la revendication 1, caractérisé par le fait qu'il comprend des moyens d'enregistrement de la position de la rotule sphérique.

7. Articulateur selon la revendication 6, caractérisé en ce que la rotule sphérique (46) est pourvue de méridiens gradués permettant de déterminer et d'enregistrer l'inclinaison de la table (47) relativement au plan horizontal.

8. Articulateur selon la revendication 1, caractérisé par le fait qu'il comprend des moyens d'enregistrement par coordonnées planes, angulaires et sphériques de la position du support du maxillaire inférieur par rapport au support du maxillaire supérieur.

9. Articulateur selon l'une des revendications 1, 2 ou 3, caractérisé par le fait qu'il comprend des moyens de positionnement zéro de ladite rotule sphérique.

10. Articulateur selon l'une des revendications 1 à 3, caractérisé par le fait qu'il comprend des moyens de blocage de chaque organe mobile.

f

Fig.1

Fig. 2

Fig. 3

Fig. 4

0143073

4/4

Office européen
des brevets

**RAPPORT DE RECHERCHE EUROPEENNE**

EP 84 81 0444

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-2 613 440 (MURRAY & BARTHEL) <br> * revendications 1 et 2; figures 1,2 et 5 * | 1,8,10 | A 61 C 11/00 |
| | --- | | |
| A | US-A-2 600 899 (L. CLAIN) <br> * revendication 1; figure 1 * | 1,10 | |
| | --- | | |
| A | CH-A- 390 046 (G. SCHRADER) <br> * revendications 2 et 8; page 2, lignes 8-11; figure 4 * | 2,4,5 | |
| | --- | | |
| A | US-A-4 019 708 (E. CROUP) <br> * revendication 1; figures 1,2,3 * | 4 | |
| | --- | | |
| A | US-A-3 176 400 (A. PIETRO) <br> * figures 1 et 3 * | 6,7 | **DOMAINES TECHNIQUES RECHERCHES (Int. Cl.4)** <br> A 61 C <br> F 16 M |
| | ----- | | |

Le présent rapport de recherche a été établi pour toutes les revendications

| Lieu de la recherche <br> LA HAYE | Date d'achèvement de la recherche <br> 07-12-1984 | Examinateur <br> EHRSAM F.J.A. |
|---|---|---|